Europäisches Patentamt

European Patent Office

Office européen des brevets

(19)

(11) Veröffentlichungsnummer: **0 229 861**
**B1**

(12) **EUROPÄISCHE PATENTSCHRIFT**

(45) Veröffentlichungstag der Patentschrift:
**10.08.88**

(21) Anmeldenummer: **86100862.1**

(22) Anmeldetag: **23.01.86**

(51) Int. Cl.⁴: **F 16 L 15/00,** E 21 B 17/042

(54) Rohrverbindung für Öl- und Gasfeldrohre.

(43) Veröffentlichungstag der Anmeldung:
**29.07.87 Patentblatt 87/31**

(45) Bekanntmachung des Hinweises auf die Patenterteilung:
**10.08.88 Patentblatt 88/32**

(84) Benannte Vertragsstaaten:
**AT DE FR GB NL SE**

(56) Entgegenhaltungen:
**FR-A-2 281 488**
**GB-A-2 140 117**
**US-A-3 870 351**

(73) Patentinhaber: **MANNESMANN Aktiengesellschaft,**
**Mannesmannufer 2 Postfach 5501, D-4000**
**Düsseldorf 1 (DE)**

(72) Erfinder: **Der Erfinder hat auf seine Nennung**
**verzichtet**

(74) Vertreter: **Andrejewski, Walter, Theaterplatz 3**
**Postfach 100254, D-4300 Essen 1 (DE)**

EP 0 229 861 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

Die Erfindung bezieht sich gattungsgemäß auf eine Rohrverbindung für Öl- und Gasfeldrohre aus Muffenrohrelement mit einschraubbegrenzender, von innen nach außen flachkonisch zurückspringender Innenschulter und Bolzenrohrelement mit im kraftverschraubten Zustand der Rohrverbindung an der Innenschulter flächig anliegender Gegenschulter, wobei das Muffenrohrelement sowie das Bolzenrohrelement rohrseitig komplementäre konische Gewinde und innenschulterseitig bzw. gegenschulterseitig gewindefreie Abschnitte aufweisen, wobei der gewindefreie Abschnitt im Muffenrohrelement als Dichtungshohlkegel ausgeführt sowie der gewindefreie Abschnitt am Bolzenrohrelement als Dichtungsballen gestaltet ist. - Die Rohrverbindung kann sowohl aus kurzen Muffen mit beidseitigem Innengewinde und Rohren, die an beiden Enden Außengewinde haben, als auch aus sogenannten Integralverbindungen bestehen. Eine Integralverbindung liegt vor, wenn die langen Rohre an einem Ende Außen- und am anderen Ende Innengewinde haben und die langen Rohre unmittelbar aneinandergeschraubt werden. Es versteht sich, daß der Konuswinkel der Innenschulter die Selbsthemmung berücksichtigen muß. Er ist größer als der Winkel der Selbsthemmung und liegt daher im allgemeinen, im Bereich von 10 bis 30°, vorzugsweise bei etwa 15°.

Bei der bekannten gattungsgemäßen Rohrverbindung (DE-C-15 33 619) ist der Dichtungsballen überall ballig und mit entsprechenden Krümmungsradien ausgerüstet. Im handverschraubten Zustand, d. h. vor Einsetzen der Kraftverschraubung, bekommt der Dichtungsballen Kontakt mit dem Dichtungshohlkegel und liegt der Dichtungsballen, an seiner Kontaktstelle ringförmig am Dichtungshohlkegel an. Man erreicht auf diese Weise bei Kraftverschraubung eine sichere Abdichtung, muß jedoch an der ringförmigen Kontaktstelle zwischen Dichtungsballen und Dichtungshohlkegel hohe Flächenpressungen in Kauf nehmen. Das kann bei häufigen Verschraubungen zu einer störenden Verformung an den Dichtflächen von Dichtungsballen bzw. Dichtungshohlkegeln führen. Außerdem ist die Dichtfläche am Dichtungsballen gegen mechanische Beschädigungen empfindlich.

Der Erfindung liegt die Aufgabe zugrunde, eine gattungsgemäße Rohrverbindung so weiter auszubilden, daß eine sichere Abdichtung unter Verzicht auf die beschriebene Abrollbewegung erreichbar ist und daß die Dichtwirkung durch mechanische Beschädigungen am Dichtungsballen nicht mehr beeinträchtigt ist.

Zur Lösung dieser Aufgabe lehrt die Erfindung, daß der Dichtungsballen eine kegelförmige Abflachung aufweist, die im handverschraubten Zustand der Rohrverbindung, bei dem zwischen Innenschulter und Gegenschulter ein bei der anschließenden Kraftverschraubung zu schließender Kraftverschraubungsspalt freibleibt, deren Kegelwinkel mit einer Toleranz von 0 bis minus 1 Grad entprechend dem Dichtungshohlkegel verläuft sowie an diesem anliegt, und daß die Innenschulter sowie die Gegenschulter in diesem handverschraubten Zustand parallel zueinander angeordnet sind. Es versteht sich, daß zu einer erfindungsgemäßen Rohrverbindung vom Hersteller für die Kraftverschraubung ein Verschraubungsmomentbereich, der experimentell erprobt wurde, angegeben wird.

- Die Erfindung nutzt die Tatsache, daß am Dichtungsballen auch eine kegelförmige Abflachung eine sichere Abdichtung bewirken kann, wenn die Gestaltung im übrigen so getroffen ist, daß nach der Handverschraubung die Innenschulter sowie die Gegenschulter parallel zueinander angeordnet sind. Bei der weiteren Verschraubung unter Kraft bis zur vollständigen Kraftverschraubung treten Verformungen auf, wobei am Ende der Kraftverschraubung die Innenschulter sowie die Gegenschulter wieder parallel zueinander und flächig gegeneinander liegen. Daraus resultieren Verspannungsverhältnisse, die eine sichere Abdichtung zwischen Abflachung und Dichtungshohlkegel bewirken, und zwar bei verhältnismäßig niedrigen Flächenpressungen. Wegen der Abflachung des Dichtungsballens ist die Abdichtung auch weniger empfindlich gegen mechanische Beschädigung. Die Abflachung und damit die Dichtfläche erstreckt sich nämlich in axialer Richtung verhältnismäßig weit und übliche mechanische Beschädigungen, wie sie im Ölfeld oder Gasfeld auftreten, besitzen demgegenüber nur eine kleine Ausdehnung. Eine vollständige mechanische Beschädigung der Abflachung, die die Dichtwirkung beeinträchtigt, ist damit praktisch ausgeschlossen. An dem Dichtungsballen müssen die Übergänge zu der Abflachung nicht notwendigerweise als doppelt gekrümmte Flächen ausgeführt werden.

Die komplementär-konischen Gewinde können an sich sehr unterschiedlich gestaltet sein; jedoch werden im Rahmen der Erfindung vorzugsweise solche mit trapez- oder sägezahnförmigen Zahnprofilen eingesetzt. Der Zahngrund kann dabei parallel zur Rohrachse oder zu dem Gewindekegelmantel verlaufen. Anwendbar sind insbesondere derartige Gewinde, deren auf Abstreifung beanspruchte Fläche unter einem Winkel zwischen plus/minus 15° zur Rohrachse gerichtet ist. Das Gewinde kann ein- oder mehrgängig ausgebildet sein. Im allgemeinen hat das Gewindeprofil am Bolzenrohrelement ein Übermaß an Gewindezahnbreite und/oder Gewindezahnhöhe gegenüber dem Maß der Zahnlücke in dem Muffenrohrelement.

Im einzelnen bestehen im Rahmen der Erfindung mehrere Möglichkeiten der weiteren Ausbildung und Gestaltung. Es versteht sich, daß der gewindefreie Abschnitt des Bolzenrohrelementes ausreichend elastisch verformbar sein muß. Im einfachsten Falle wird dazu die Wanddicke entsprechend eingestellt. Wo wegen der auftretenden Beanspruchungen eine verhältnismäßig große Wanddicke eingerichtet werden muß, lehrt die Erfindung, daß am rohrseitigen Ende des Dichtungsballens durch eine umlaufende, nach aussen offene Ringnut ein Verformungsbereich für eine radiale elastische Verformung des Dichtungsballens angeordnet ist. Solche Ringnuten sind an sich bekannt (DE-AS-24 38 307), dienen dort jedoch einem anderen Zweck, nämlich zur Schaffung eines Einstellfreiheitsgrades in axialer Richtung, damit sowohl eine Innendichtung als auch eine am äußeren Muffenrand angeordnete Aussendichtung beide sicher wirken. Bei der erfindungsgemäßen Rohrverbindung erfolgt die Auslegung zweckmäßigerweise so, daß die Streckgrenze der Werkstoffe im Dichtungsbereich nicht überschritten wird. Dazu empfiehlt die Erfindung, daß die Abflachung und der Kraftverschraubungsspalt unter Berücksichtigung des Konuswinkels an der Innenschulter so ausgelegt sind, daß die Flächenpressung zwischen Abflachung und Dichtungshohlkegel die Streckgrenze der Werkstoffe von Bolzenrohrelement und Muffenrohrelement nicht überschreitet. Im Rahmen der Erfindung liegt es, die Streckgrenze des Werkstoffes von Bolzenrohrelement und Muffenrohrelement im Bereich der Abflachung und des Dichtungshohlkegels durch eine Kaltverfestigung, z. B. durch Schleifen oder Festwalzen, zu erhöhen. Außerdem empfiehlt es sich, die Abriebfestigkeit der Abflachung sowie des Dichtungshohlkegels z. B. durch eine Hartverchromung, zu verbessern. Die Reibung zwischen Abflachung und Dichtungshohlkegel wird zweckmäßigerweise durch eine Oberflächenbehandlung reduziert.

Handelt es sich um eine Rohrverbindung aus üblichen Werkstoffen mit üblichen Werkstoffgütern und üblicher Dimensionierung, wie es der internationalen Standardisierung für Ölfeldrohre und Gasfeldrohre entspricht, so erreicht man sehr optimale Verhältnisse dadurch, daß die Abflachung eine axiale Erstreckung aufweist, die sich von der radialen Erstreckung der Gegenschulter um einen Faktor von 0,5 bis 1,5 unterscheidet. In diesem Zusammenhang empfiehlt die Erfindung fernerhin, daß die Abflachung und damit der Dichtungshohlkegel einen Kegelwinkel aufweisen, der um etwa einen Faktor 3 größer ist als der Kegelwinkel der komplementären konischen Gewinde.

Arbeitet man mit einer erfindungsgemäßen Rohrverbindung, so können weitere reibungsreduzierende Maßnahmen verwirklicht werden. Gegenstand der Erfindung ist in diesem Zusammenhang auch ein Verfahren zum Betrieb, d. h. zum Zusammenschrauben einer Rohrverbindung des beschriebenen Aufbaus. Das Verfahren ist dadurch gekennzeichnet, daß die Abflachung und/oder der Dichtungshohlkegel mit einem reibungsreduzierenden Schmierstoff versehen werden und daß danach erst die Verschraubung durchgeführt wird. Zusätzlich können auch die Innenschulter und/oder die Gegenschulter mit einem reibungsreduzierenden Schmierstoff versehen werden.

Im folgenden wird die Erfindung anhand einer lediglich ein Ausführungsbeispiel darstellenden Zeichnung ausführlicher erläutert. Es zeigen in schematischer Darstellung

Fig. 1 einen Axialschnitt durch eine erfindungsgemäße Rohrverbindung ausschnittweise und im handverschraubten Zustand,

Fig. 2 den vergrößerten Ausschnitt A aus dem Gegenstand nach Fig. 1.

Die in den Figuren dargestellte Rohrverbindung ist für Ölfeldrohre oder Gasfeldrohre bestimmt. Sie besteht in ihrem grundsätzlichen Aufbau aus einem Muffenrohrelement 1 mit einschraubbegrenzender, von innen nach außen flachkonisch zurückspringender Innenschulter 2 und einem Bolzenrohrelement 3 mit im kraftverschraubten Zustand der Rohrverbindung an der Innenschulter 2 flächig anliegender stirnseitiger Gegenschulter 4.

Dargestellt ist zur Erläuterung der für die Erfindung wesentlichen Maßnahmen nicht der kraftverschraubte, sondern der handverschraubte Zustand.

Das Muffenrohrelement 1 sowie das Bolzenrohrelement 3 tragen rohrseitig komplementäre konische Gewinde 5 bzw. 6 und innenschulterseitig bzw. gegenschulterseitig gewindefreie Abschnitte 7 bzw. 8. Der gewindefreie Abschnitt 7 im Muffenrohrelement 1 ist als Dichtungshohlkegel ausgeführt. Der gewindefreie Abschnitt 8 am Bolzenrohrelement 3 ist als Dichtungsballen gestaltet.

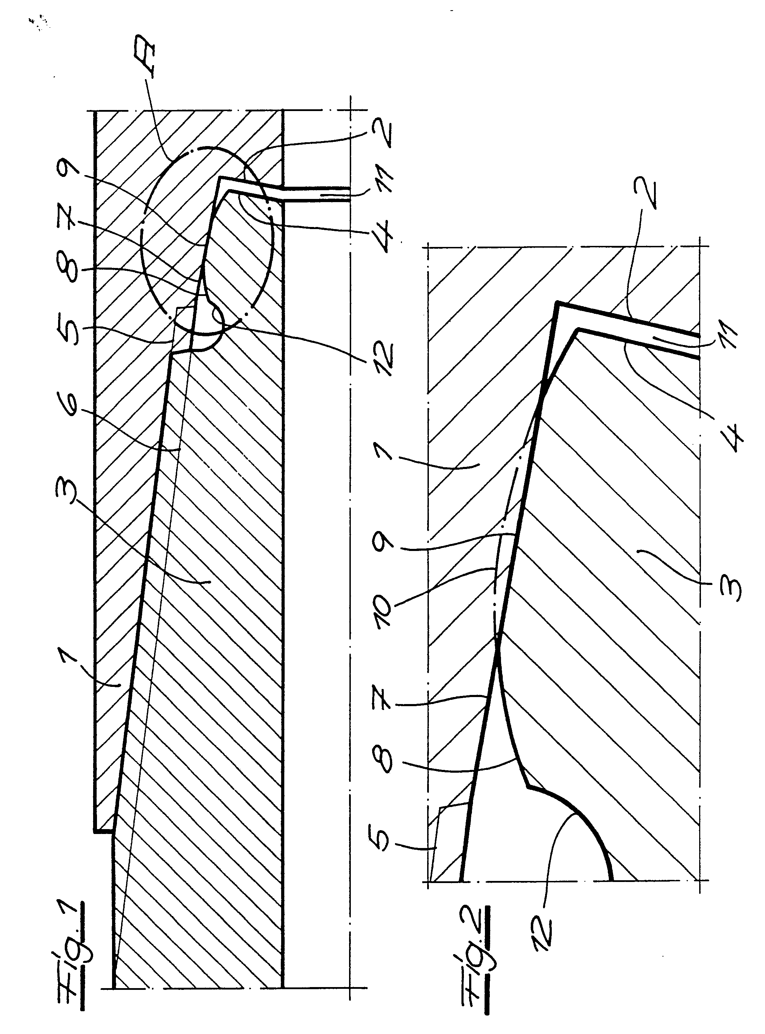

Insbesondere aus der Fig. 2 entnimmt man, daß der Dichtungsballen 8 eine kegelförmige Abflachung 9 aufweist. Wäre er vollkommen ballig gestaltet, so würde seine Kontur der in Fig. 2 strichpunktiert eingezeichneten bogenförmigen Linie 10 entsprechen. Dieser Bereich ist also erfindungsgemäß entfernt und durch die Abflachung 9 ersetzt. Der Kegelwinkel der Abflachung 9 wird mit einer Toleranz von 0 bis minus 1 Grad hergestellt. Die Abflachung 9 verläuft in dem handverschraubten Zustand, der in den Figuren dargestellt ist, bis auf das angegebene Toleranzmaß, entsprechend dem Dichtungshohlkegel 7 und liegt an diesem an.

Der handverschraubte Zustand der Rohrverbindung ist derjenige, bei dem zwischen Innenschulter 2 und Gegenschulter 4 ein bei der anschließenden Kraftverschraubung zu schließender Kraftverschraubungsspalt 11 freibleibt. Die Anordnung ist so getroffen, daß die Innenschulter 2 sowie die Gegenschulter 4 in diesem handverschraubten Zustand parallel zueinander angeordnet sind.

Im Ausführungsbeispiel und nach bevorzugter Ausführungsform der Erfindung ist am rohrseitigen Ende des Dichtungsballens 8 durch

...hre r···nç..ine r .. iaufende, nach außen offene Ringnut 12 ein Ve. formungsbereich für eine radiale elastische Verformung des Dichtungsballens 8 angeordnet. Die Abflachung 9 und der Kraftverschraubungsspalt 11 sind unter Berücksichtigung des im Ausführungsbeispiel etwa 15° betragenden Konuswinkels an der Innenschulter 2 so ausgelegt, daß die Flächenpressung zwischen Abflachung 9 und Dichtungshohlkegel 7 im kraftverschraubten Zustand die Streckgrenze der Werkstoffe von Muffenrohrelement 1 und Bolzenrohrelement 3 nicht überschreitet. - Nicht dargestellt wurde, daß die Streckgrenze des Werkstoffes im Bereich der Abflachung 9 bzw. des Dichtungshohlkegels 7 durch eine Kaltverfestigung erhöht sein kann. Auch kann die Abriebfestigkeit in diesen Bereichen verbessert sein, die Reibung zwischen Abflachung 9 und Dichtungshohlkegel 7 wird zweckmäßigerweise durch eine Oberflächenbehandlung reduziert.

Die Abflachung 9 besitzt eine axiale Erstreckung, die sich von der radialen Erstreckung der Gegenschulter 4 um einen Faktor von 0,5 bis 1,5 unterscheidet. Man entnimmt aus den Figuren, daß die Abflachung 9 und damit der Dichtungshohlkegel 7 einen Kegelwinkel aufweisen, der um etwa einen Faktor 3 größer ist als der Kegelwinkel der konischen Gewinde 5, 6.

## Patentansprüche

1. Rohrverbindung für Öl- und Gasfeldrohre aus Muffenrohrelement mit einschraubbegrenzender, von innen nach außen flachkonisch zurückspringender Innenschulter und

Bolzenrohrelement mit im kraftverschraubten Zustand der Rohrverbindung an der Innenschulter flächig anliegender Gegenschulter,

wobei das Muffenrohrelement sowie das Bolzenrohrelement rohrseitig komplementäre konische Gewinde und innenschulterseitig bzw. gegenschulterseitig gewindefreie Abschnitte aufweisen, wobei der gewindefreie Abschnitt im Muffenrohrelement als Dichtungshohlkegel ausgeführt sowie der gewindefreie Abschnitt am Bolzenrohrelement als Dichtungsballen gestaltet ist, dadurch gekennzeichnet, daß der Dichtungsballen (8) eine kegelförmige Abflachung (9) aufweist, die im handverschraubten Zustand der Rohrverbindung, bei dem zwischen Innenschulter (2) und Gegenschulter (4) ein bei der anschließenden Kraftverschraubung zu schließender Kraftverschraubungsspalt (11) freibleibt, deren Kegelwinkel mit einer Toleranz von 0 bis minus 1 Grad entsprechend dem Dichtungshohlkegel (7) verläuft sowie an diesem anliegt, und daß die Innenschulter (2) sowie die Gegenschulter (4) in diesem handverschraubten Zustand parallel zueinander angeordnet sind.

2. Rohrverbindung nach Anspruch 1, dadurch gekennzeichnet, daß am rohrseitigen Ende des Dichtungsballens (8) durch eine umlaufende, nach außen offene Ringnut (12) ein Verformungsbereich für eine radiale elstische Verformung des Dichtungsballens (8) angeordnet ist.

3. Rohrverbindung nach einem der Ansprüche 1 oder 2, dadurch gekennzeichnet, daß die Abflachung (9) und der Kraftverschraubungsspalt (11) unter Berücksichtigung des Konuswinkels an der Innenschulter (2) so ausgelegt sind, daß die Flächenpressung zwischen Abflachung (9) und Dichtungshohlkegel (7) die Streckgrenze der Werkstoffe von Muffenrohrelement (1) und Bolzenrohrelement (3) im kraftverschraubten Zustand nicht überschreitet.

4. Rohrverbindung nach einem der Ansprüche 1 bis 3, dadurch gekennzeichnet, daß die Streckgrenze des Werkstoffes von Muffenrohrelement (1) und Bolzenrohrelement (3) im Bereich der Abflachung (9) und der Dichtungshohlkegel (7) durch eine Kaltverfestigung, z. B. durch Schleifen oder Festwalzen erhöht ist.

5. Rohrverbindung nach einem der Ansprüche 1 bis 4, dadurch gekennzeichnet, daß die Abtriebfestigkeit der Abflachung (9) sowie des Dichtungshohlkegels (7), z. B. durch eine Hartverchromung, erhöht ist.

6. Rohrverbindung nach einem der Ansprüche 1 bis 5, dadurch gekennzeichnet, daß die Reibung zwischen der Abflachung (9) und dem Dichtungshohlkegel (7) durch eine Oberflächenbehandlung reduziert ist.

7. Rohrverbindung nach einem der Ansprüche 1 bis 6, dadurch gekennzeichnet, daß die Abflachung (9) eine axiale Erstreckung aufweist, die sich von der radialen Erstreckung der Gegenschulter (4) um einen Faktor von 0,5 bis 1,5 unterscheidet.

8. Rohrverbindung nach einem der Ansprüche 1 bis 7, dadurch gekennzeichnet, daß die Abflachung (9) und damit der Dichtungshohlkegel (7) einen Kegelwinkel aufweisen, der um etwa einen Faktor 3 größer ist als der Kegelwinkel der konischen Gewinde (5, 6).

9. Verfahren zum Zusammenschrauben einer Rohrverbindung nach einem der Ansprüche 1 bis 8, dadurch gekennzeichnet, daß die Abflachung und/oder der Dichtungshohlkegel mit einem reibungsreduzierenden Schmierstoff versehen werden und danach die Verschraubung durchgeführt wird.

10. Verfahren nach Anspruch 9, dadurch gekennzeichnet, daß zusätzlich die Innenschulter und/oder die Gegenschulter mit einem reibungsreduzierenden Schmierstoff versehen werden und danach die Verschraubung durchgeführt wird.

## Claims

1. A pipe connection for oilfield and gasfield pipes, consisting of a socket pipe unit with an internal shoulder sloping backwards from the inside towards the ouside as a shallow cone, and serving to limit the extent of screw tightening of the connection and a spigot pipe unit with a counter-shoulder that lies flat against the internal shoulder when the pipe connection is power-tightened, in which the socket pipe unit and the spigot pipe unit possess complementary conical pipe threads and with unthreaded portions near to the internal shoulder and the counter-shoulder, whereby the unthreaded portion in the socket pipe unit is constructed as a hollow tapered seal and the unthreaded portion on the spigot pipe unit as a convex seal, characterised in that the convex seal (8) has a conically-shaped flattening (9) which, when the pipe connection is screw-tightened up by hand, leaves open a gap (11) between the internal shoulder (2) and the counter-shoulder (4) to be subsequently closed by power-tightening, the conical angle of this flattening extending with a tolerance of zero to minus 1 degree relatively to that of the hollow tapered seal (7) against which the flattening lies, and that in this hand-tightened condition the internal shoulder (2) and the counter-shoulder (4) are located parallel to one another.

2. A pipe connection according to Claim 1, characterised in that a deformation area for radial elastic deformation of the convex seal (8) is located at the pipe end of the convex seal (8) in the form of an outwardly-open peripheral groove (12).

3. A pipe connection according to one of Claims 1 or 2, characterised in that the flattening (9) and the power-tightening gap (11) are so designed, taking account of the conical angle of the internal shoulder (2), that in the power-tightened condition the surface pressure between the flattening (9) and the hollow tapered seal (7) does not exceed the elastic limit of the materials of the socket pipe unit (1) and the spigot pipe unit (3).

4. A pipe connection according to one of Claims 1 to 3, characterised in that the elastic limit of the material of the socket pipe unit (1) and the spigot pipe unit (3) in the areas of the flattening (9) and the hollow tapered seal (7) is increased by a cold-strengthening process, e.g. by grinding or cold-rolling.

5. A pipe connection according to one of Claims 1 to 4, characterised in that the wear resistance of the flattening (9) as well as the hollow tapered seal (7) is increased e.g. by hard chromium plating.

6. A pipe connection according to one of Claims 1 to 5, characterised in that the friction between the flattening (9) and the hollow tapered seal (7) is reduced by a surface treatment.

7. A pipe connection according to one of Claims 1 to 6, characterised in that the flattening (9) extends over an axial distance that differs from the radial length of the counter-shoulder (4) by a factor of from 0.5 to 1.5.

8. A pipe connection according to one of Claims 1 to 7, characterised in that the flattening (9) and with it the hollow tapered seal (7) have a conical angle that is greater than the conical angle of the conical threads (5, 6) by a factor of about 3.

9. A process for screwing together a pipe connection according to one of Claims 1 to 8, characterised in that the flattening and/or the hollow tapered seal are/is treated with a friction-reducing lubricant and the screwing-together is effected subsequently.

10. A process according to Claim 9, characterised in that in addition the internal shoulder and/or the counter-shoulder are treated with a friction-reducing lubricant and the screwing-together is effected subsequently.

## Revendications

1. Raccord pour tuyaux de champs de pétrole et de gaz, comprenant un élément de tuyau en forme de manchon comportant un épaulement intérieur limitant le vissage et s'étendant en retrait de l'intérieur vers l'extérieur avec une forme de cône aplati, et par un élément de tuyau en forme de tige comportant un épaulement antagoniste s'appliquant sur une certaine surface contre l'épaulement intérieur, lorsque le raccord pour tuyaux est à l'état vissé à force, l'élément de tuyau en forme de manchon ainsi que l'élément de tuyau en forme de tige possédant des filetages coniques complémentaires, côté tuyau, et des sections exemptes de filetages du côté de l'épaulement intérieur et de l'épaulement antagoniste, et dans lequel la section exempte de filetage, située dans l'élément de tuyau en forme de manchon est réalisée sous la forme d'un cône creux d'étanchéité et la section exempte de filetage sur l'élément de tuyau en forme de tige étant agencée sous la forme d'un organe d'étanchéité bombé, caractérisé par le fait que l'organe d'étanchéité bombé (8) possède un méplat de forme conique (9) qui, lorsque le raccord pour tuyau se trouve dans l'état vissé manuellement, libère entre l'épaulement intérieur (2) et le contre-épaulement (4), une fente de vissage à force (11) qui doit être fermée lors du vissage à force ultérieur et possédant la forme d'un cône dont l'angle correspond, à une tolérance près de 0 à moins 1 degré, à celui du cône creux d'étanchéité (7), et s'applique contre ce cône et que, dans cet état vissé à la main, l'épaulement intérieur (2) et le contre-épaulement (4) sont parallèles entre eux.

2. Raccord pour tuyaux selon la revendication 1, caractérisé en ce qu'une zone de déformation permettant une déformation élastique radiale de l'organe d'étanchéité bombé (8) est prévue sur l'extrémité, côté tuyau, de l'organe d'étanchéité bombé (8), grâce à la présence d'une gorge annulaire circonférentielle (12) ouverte vers l'extérieur.

3. Raccord pour tuyaux selon l'une des revendications 1 ou 2, caractérisé en ce que le méplat (9) et la fente de vissage à force (11) sont agencés, en tenant compte de l'angle du cône au niveau de l'épaulement intérieur (2), de manière que la pression superficielle entre le méplat (9) et le cône creux d'étanchéité (7) ne dépasse pas la limite d'allongement des matériaux de l'élément de tuyau en forme de manchon (1) et de l'élément de tuyau en forme de tige (3).

4. Raccord pour tuyaux selon l'une des revendications 1 à 3, caractérisé en ce que la limite d'allongement du matériau de l'élément de tuyau en forme de manchon (1) et de l'élément de tuyau en forme de tige (3) est accrue, dans la zone du méplat (9) et des cônes creux d'étanchéité (7), par un écrouissage, obtenu par exemple par meulage ou laminage.

5. Raccord pour tuyaux selon l'une des revendications 1 à 4, caractérisé en ce que la résistance à l'usure par frottement du méplat (9) ainsi que du cône creux d'étanchéité (16) est accrue par exemple au moyen d'un chromage dur.

6. Raccord pour tuyaux selon l'une des revendications 1 à 5, caractérisé en ce que le frottement entre le méplat (9) et le cône creux d'étanchéité (7) est réduit grâce à un traitement de surface.

7. Raccord pour tuyaux selon l'une des revendications 1 à 6, caractérisé en ce que le méplat (9) possède une étendue axiale qui diffère d'un facteur compris entre 0,5 et 1,5, de l'étendue radiale de l'épaulement antagoniste (4).

8. Raccord pour tuyaux selon l'une des revendications 1 à 7, caractérisé en ce que l'angle du cône formé par le méplat (9) et par conséquent du cône creux d'étanchéité (7) est supérieur, approximativement du facteur 3, à l'angle du cône des filetages coniques (5, 6).

9. Procédé pour fermer un raccord pour tuyaux selon l'une des revendications 1 à 8, caractérisé en ce qu'on applique un lubrifiant réduisant le frottement au méplat et/ou au cône creux d'étanchéité et qu'on exécute ensuite le vissage.

10. Procédé selon la revendication 9, caractérisé en ce qu'on applique en outre un lubrifiant réduisant le frottement sur l'épaulement intérieur et/ou sur l'épaulement antagoniste et qu'on exécute ensuite le vissage.

Fig.1

Fig.2